Europäisches Patentamt

European Patent Office

Office européen des brevets

(11) Publication number: **0 447 735 A1**

# EUROPEAN PATENT APPLICATION

(21) Application number: **90830105.4**

(22) Date of filing: **15.03.90**

(51) Int. Cl.5: **H01M 4/96**, H01M 4/86, H01M 4/88

(43) Date of publication of application:
**25.09.91 Bulletin 91/39**

(84) Designated Contracting States:
**DE FR GB IT**

(71) Applicant: **TANAKA KIKINZOKU KOGYO K.K.**
**6-6, Kayaba-CHO 2-chome, Nihonbashi**
**Chuo-ku Tokyo 103(JP)**

Applicant: **Watanabe, Masahiro**
**2-10, Kitashin 1-chome**
**Kofu-shi Yamanashi(JP)**

(72) Inventor: **Watanabe, Masahiro**
**No. 2-10 Kitashin 1-chome**
**Kofu-shi, Yamanashi(JP)**

(74) Representative: **Pellegri, Alberto et al**
**c/o Società Italiana Brevetti S.p.A. Via**
**Cavour, 9**
**I-21100 Varese(IT)**

(54) **Fine powdery body for gas diffusion electrode and water repellent treatment thereof.**

(57) A fine powdery porous body for use in preparing a gas diffusion electrode, in which approximately an entire surface of fine powder or fiber is covered with water repellent fine particles or a water repellent thin film, the water repellent fine particles having a smaller particle size than the average particle size of the fine powder or the diameter of the fine fiber. A water repellent treating method of the fine powdery porous body is carried out by direct polymerisation of a monomer of the water repellent fine particles or thin film.

EP 0 447 735 A1

## BACKGROUND OF THE INVENTION

### Field of the Invention

The present invention relates to a fine powdery porous body having an excellent water repellent property and gas supply ability for use in preparing a gas diffusion electrode and a water repellent treatment therefor.

### Description of the Background Art

A conventional gas diffusion electrode of a fuel cell or the like comprises a catalyst layer and a gas supply layer contacted thereto, and the gas diffusion electrode is prepared by applying or contracting under pressure a mixture of carbon black and water repellent polytetrafluoroethylene (PTFE). The gas diffusion electrode is also prepared by contacting the PTFE to a carbon paper and sintering the same, However, in order to maintain the gas supply ability of the gas supply layer of the gas diffusion electrode for a long time of period, it is necessary to add a large amount of PTFE, and as a result, fine pores among the carbon black particles are closed by the PTFE to invite reduction of the gas supply ability, with the result of the fall-off of the ability of the call when the cell is used.

Further, the catalyst layer of the gas diffusion electrode includes gas diffusion paths and electrolytic solution paths therein. A reaction gas supplied from the gas supply layer diffuses in the gas diffusion paths in the catalyst layer and dissolves in the electrolytic solution contacted with the catalyst layer to effect an electrode reaction on the catalyst in the electrolytic solution.

However, even in the catalyst layer, as observed, for instance, in a phosphoric acid type fuel cell or the like, the electrolytic solution comes in the gas diffusion paths in a long time operation to invite reduction of the gas supply ability, thereby causing an extreme lowering of the ability of the cell. When an amount of the water repellent agent is increased in order to prevent this problem, it becomes difficult for the electrolytic solution to penetrate or enter into the catalytic layer, and hence the catalyst can not participate the reaction to bring about the reduction of the ability of the cell.

In order to satisfy both the gas supply ability and the catalytic reaction ability in the catalyst layer, a mixture including hydrophobic fine particles and carbon black fine powder excluding catalyst is mixed with catalyst fine powder excluding a water repellent agent, and a catalyst layer is prepared by using the obtained mixture. However, in this case, it is necessary to increase a composition ratio of the hydrophobic fine particles in the mixture in order to keep the gas supply ability for a long time of period, which necessarily invites the reduction of the gas supply ability.

## SUMMARY OF THE INVENTION

Accordingly, it is an object of the present invention to provide a fine powdery porous body for use in preparing a gag diffusion electrode, free from the aforementioned defects and disadvantages of the prior art, which is capable of improving gas supply ability and catalytic ability at the same time.

It is another object of the present invention to provide a water repellent treating method for a fine powdery porous body for use in preparing a gas diffusion electrode, free from the aforementioned defects and disadvantages of the prior art, which is capable of improving gas supply ability and catalytic ability at the same time.

In accordance with one aspect of the present invention, there is provided a fine powdery porous body for use in preparing a gas diffusion electrode, comprising fine powder or fiber and water repellent fine particles having a smaller particle size than an average particle size of the fine powder or a diameter of the fine fiber or a water repellent thin film, approximately an entire surface of the fine powder or fiber being covered with the water repellent fine particles or the water repellent thin film.

In accordance with another aspect of the present invention, there is provided a water repellent treating method of a fine powdery porous body for use in preparing a gas diffusion electrode, comprising covering approximately an entire surface of fine powder or fiber with water repellent fine particles having a smaller particle size than an average particle size of the fine powder or a diameter of the fine fiber or by a water repellent thin film by direct polymerization of a gaseous monomer thereof.

## DESCRIPTION OF THE PREFERRED EMBODIMENTS

The present invention will now be described in detail with reference to its preferred embodiments.

In a fine powdery porous body for use in preparing a gas diffusion electrode according to the present invention, approximately the entire surface of fine powder or fine fiber is covered with water repellent fine particles having a smaller particle size than the average particle size of the fine powder or the diameter of the fine fiber or with a water repellent thin film.

The fine powder or the fine fiber is preferably composed of carbon, a metal, an oxide, a carbide, a nitride, a boride, or the like.

The water repellent fine particle or thin film is preferably composed of polytetrafluoroethylene, tetrafluoroethylene-perfuloroalkoxyethylene copolymer, tetrafluoroethylene-hexafluoropropylene copolymer, or the like.

The amount of the water repellent fine particle or thin film is preferably at most 20% by weight with respect to the fine powder or the fine fiber.

In a water repellent treating method of the fine powdery porous body for use in preparing a gas diffusion electrode according to the present invention, approximately the entire surface of the fine powder or the fine fiber is covered with the water repellent fine particles having a smaller particle size than the average particle size of the fine powder or the diameter of the fine fiber or with the water repellent thin film by direct polymerization of a monomer thereof.

In the water repellent treating method, either after or before the fine powder or the fine fiber may be processed into a sheet form, the entire surface of the fine powder or the fine fiber may be covered with the water repellent fine particles or the thin film by direct polymerization of a monomer thereof.

Examples of the present invention will now be described in detail.

Example 1

10 g of carbon black having BET surface area of 600 $m^2$/g, which was obtained by a calcination process by heat treatment at 2000 $^\circ$C, was immersed in 500 ml of paraffinic trichloroethylene solution (10 wt%), and was dried at 50 $^\circ$C. Then, the carbon black was immersed in a methanol solution containing 300 mg of ammonium persulfate and 20 mg of pertluorooctanoic acid and was dried at 50 $^\circ$C. The dried carbon black was ground into fine powder by a mixer and was filled up in an autoclave. Then, nitrogen gas was introduced into the autoclave to deoxidize the carbon black, and tetrafluoroethylene (TFE) was then introduced into the autoclave at a pressure of one atom. In the autoclave, the gas was so violently stirred at 50 $^\circ$C for 20 minutes by an agitator that the carbon black became a powdery fluid. After the unreacted TFE was substituted by nitrogen gas, the obtained material was taken out of the autoclave.

The weight change of the obtained material before and after the reaction was 10. 2 wt% increase, and thus it was found that carbon black powder covered by polytetrafluoroethylene (PTFE) was obtained. By using a scanning electron microscope (SEM) or a transmission electron microscope (TEM), no PTFE particle having a larger particle size than that of the carbon black could not be observed at all, but the fine PTFE particles were gathered to be observed as a continuous film at a glance. This powder was mixed with 5% by weight of normal PTFE fine powder as a binder. The obtained powdery mixture was put in a jig to mold under a pressure of 50 kg/$cm^2$, and the molded specimen was heated at 330 $^\circ$C for 10 minutes to obtain a porous plate.

Then, for a comparison, the carbon black without treating with the TFE in the autoclave and 5% by weight of PTFE fine powder were mixed, and the obtained powdery mixture was put in the jig to mold under a pressure of 50 kg/$cm^2$, and the molded specimen was heated at 330 $^\circ$C for 10 minutes to obtain a porous plate.

Further, for another comparison, the same carbon black and conventionally used PTFE dispersion were mixed, dehydrated and dried, and the dried powder was molded in the same manner as described above to obtain a porous plate.

The obtained each porous plate was put on a carbon felt impregnated with 100% phosphoric acid under load, and was held in an oven at 190 $^\circ$C to measure a saturated absorption amount of the phosphoric acid.

In the porous plate of the present invention, although only 15 Wt% of PTFE including 5 wt% of normal PTFE as a binder was included, no absorption of the phosphoric acid could not be observed at all within an experimental error range. In the porous plate of the latter two cases for the comparison, it was found that more than 95% by volume of the fine pores was filled up with the phosphoric acid. Therefore, it is apparent that the water repellent treatment in the present invention is quite effective.

In case of using the carbon black which was not treated with hydrogen peroxide, although the same water repellent treatment as described above was carried out, no polymerization reaction of the TFE could not be observed within the experimental error range. Hence, it is found that the polymerization promoting effect of the hydrogen peroxide is clear.

Example 2

The carbon black was treated with the paraffinic trichloroethylene solution in the same manner as Example 1, and then was immersed in a methanol solution containing 20 mg of perfluoroactanoic acid and was dried at 50 $^\circ$C. The dried carbon black was ground into fine powder by a mixer and was filled up along with 600 ml of distilled water in an autoclave. Then, the carbon black was deoxidized by nitrogen gas bubble introduced into the autoclave, and the TFE was then introduced into the autoclave in the same manner as Example 1. In the autoclave, the gas was reacted at 50 $^\circ$C for one hour while so violently stirring by an agitator that the carbon black became a powdery fluid. Then, after the unreacted TFE was substituted by nitrogen gas, the obtained material was taken out of the autoclave. In this instance, it was found that the carbon black was covered by 9. 7 % by weight of the PTFE, and no PTFE particle having a larger particle size than that of the carbon black could not be observed at all by using the SEM or the TEM.

As described above, in the case that a gas diffusion electrode is prepared by using a fine powdery porous body of the present invention, even when the gas diffusion electrode is used as an anode for a fuel cell for a long time of period, no electrolytic solution can penetrate or enter into the gas diffusion electrode through portions which are not covered with water repellent particles even when the gas diffusion electrode is used as an anode for a fuel cell for a long time of period, and thus the gas diffusion paths formed by the fine powder or the fine fiber can not be closed by the electrolytic solution to prevent the fall-off of the gas supply ability. Of course, the fine powdery porous body of the present invention as the water repellent material can be used for the catalyst layer and/or the gas supply layer of the gas diffusion electrode without causing the reduction of the gas supply ability of the gas diffusion electrode.

Further, a water repellent treating method for a fine powdery porous body according to the present invention can be effectively used, as it is, for preparing a gas diffusion electrode, and such a gas diffusion electrode can be used by sintering at a high temperature. By this water repellent treatment, even when the water repellent fine particles or the thin film is used in amount less than 20% by weight with respect to the fine powder of the fine fiber, the same or more water repellent efficiency as or than a conventional case using a large amount of water repellent agent can be obtained, and high gas permeability can be also obtained, enabling in obtaining a fine powdery porous body for a gas diffusion electrode having high ability.

Although the present invention has been described in its preferred embodiments, it is readily understood that the present invention is not restricted to the preferred embodiments and that various changes and modifications can be made by those skilled in the art without departing from the spirit and scope of the present invention.

## Claims

1. A fine powdery porous body for use in preparing a gas diffusion electrode, comprising fine powder or fiber and water repellent fine particles having a smaller particle size than an average particle size of the fine powder or a diameter of the fine fiber or a water repellent thin film, approximately an entire surface of the fine powder or fiber being covered with the water repellent fine particles or the water repellent thin film.

2. The body of claim 1, wherein the fine powder or fiber is one of carbon, a metal, an oxide, a carbide, a nitride and a boride.

3. The body of claim 1, wherein the water repellent fine particles or the thin film is one of polytetrafluoroethylene, tetrafluoroethylene-perfuloroalkoxyethylene copolymer and tetrafluoroethylene-hexafluoropropylene copolymer. .

4. The body of claim 1, wherein an amount of the water repellent fine particles or the thin film is at most 20% by weight with respect to the fine powder or fiber.

5. A water repellent treating method of a fine powdery porous body for use in preparing a gas diffusion electrode, comprising covering approximately an entire surface of fine powder or fiber with water repellent fine particles having a smaller particle size than an average particle size of the fine powder or a diameter of the fine fiber or by a water repellent thin film by direct polymerization of a monomer thereof.

6. The method of claim 5, wherein before the fine powder or fiber is processed into a sheet form, the entire surface of the fine powder or fiber is covered with the water repellent fine particles or thin film by the direct polymerization of the monomer thereof.

7. The method of claim 5, wherein after the fine powder or fiber is processed into a sheet form, the entire surface of the fine powder or fiber is covered with the water repellent fine particles or thin film by the direct polymerization of the monomer thereof.

European
Patent Office

**EUROPEAN SEARCH
REPORT**

Application Number

**EP 90 83 0105**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN, vol. 13, no. 156 (C-585), 14th April 1989;<br>& JP-A-63 312 989 (TANAKA KIKINZOKU KOGYO K.K.) 21-12-1988<br>* Abstract * | 1,2,3 | H 01 M 4/96<br>H 01 M 4/86<br>H 01 M 4/88 |
| E | PATENT ABSTRACTS OF JAPAN, vol. 14, no. 263 (E-938), 7th June 1990;<br>& JP-A-2 82 455 (TANAKA KIKINZOKU KOGYO K.K.) 23-03-1990<br>* Abstract * | 1,2 | |
| A | US-A-3 125 468 (C.E. THOMPSON et al.)<br>* Claim 6 * | 5,7 | |
| A | EP-A-0 157 385 (HITACHI LTD)<br>* Page 13, lines 5-10; claim 5 * | 1,2,3 | |
| A | US-A-4 078 119 (MURRAY KATZ)<br>* Figure 1; claim 4 * | 1,2,3 | |
| A | FR-A-2 119 798 (CHEVET)<br>* Claim 1 * | 5 | TECHNICAL FIELDS SEARCHED (Int. Cl.5)<br><br>H 01 M |

The present search report has been drawn up for all claims

| Place of search | Date of completion of search | Examiner |
|---|---|---|
| The Hague | 21 November 90 | ANDREWS M.P. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention

E : earlier patent document, but published on, or after the filing date
D : document cited in the application
L : document cited for other reasons

 

& : member of the same patent family, corresponding document